# EUROPÄISCHE PATENTSCHRIFT

(11) **EP 2 448 697 B1**
(45) Veröffentlichungstag und Bekanntmachung des Hinweises auf die Patenterteilung: **31.08.2016**
(21) Anmeldenummer: 10737247.6
(22) Anmeldetag: 17.06.2010
(51) Int. Cl.: B22D 17/14, B22C 9/06, B29C 33/10

(54) **GUSSFORM MIT ENTLÜFTER**
CASTING MOLD COMPRISING A BREATHER
MOULE DE COULÉE À DISPOSITIF DE TIRAGE D'AIR

(30) Priorität: 02.07.2009 DE 102009031453
(43) Veröffentlichungstag der Anmeldung: 09.05.2012
(73) Patentinhaber: Beuerlein, Werner, 97332 Volkach (DE)
(72) Erfinder: Beuerlein, Werner, 97332 Volkach (DE)
(74) Vertreter: Pöhner, Wilfried Anton
(86) Internationale Anmeldenummer: PCT/DE2010/000684
(87) Internationale Veröffentlichungsnummer: WO 2011/000344

(56) Entgegenhaltungen:
- WO-A1-2004/067256
- DE-A1- 2 503 021
- DE-A1- 19 628 166
- GB-A- 1 358 329
- JP-A- 61 038 768
- US-B1- 6 367 765

## Beschreibung

Die Erfindung bezieht sich auf eine Gussformgemäß Oberbegriff des Anspruches 1.

Zur Herstellung von Gussteilen aus flüssigem Gussmaterial wie flüssigem Kunststoff oder flüssigem Metall wird eine Gussform benötigt, in die das flüssige Gussmaterial eingespritzt oder eingedrückt wird, dann erhärtet und abschließend aus der Form entfernt wird.

Bei der Verarbeitung von Duroplasten oder von Kautschuk wird das Material als Pulver oder als Paste in die Kavität eingebracht und dort durch entsprechenden Druck und eine entsprechende Temperatur verflüssigt. Nach der Reduzierung von Druck und Temperatur erhärtet es dann.

Beim Ausgießen der Form muss die darin enthaltene Luft entweichen; andernfalls würden sich Lunker - also Hohlräume - in dem Gussteil bilden. Es könnten auch wenige große oder zahlreiche kleine Poren, Schlitze oder Kerben in der Oberfläche des Gussteiles entstehend. Das Gussmaterial kann unter Umständen nicht vollständig miteinander verfließen oder es tritt eine so hohe Kompression ein, dass das Gussmaterial zu einem Teil verbrannt wird, also mit dem Sauerstoff in der Luftblase reagiert. Deshalb müssen in der Gussform Öffnungen zum Entweichen der Luft geschaffen werden.

Dafür ist z. B. der in der Patentschrift DE 151209 beschriebene, kleine Abstand zwischen den aneinander grenzenden Formteilen der Gussform weithin bekannt. Durch kleine Distanznasen auf der Berührungsfläche der einzelnen Formen wird ein schmaler Luftspalt geschaffen. Der Nachteil dieses Spaltes ist jedoch, dass flüssiges Gussmaterial darin eindringen kann, wodurch sich am fertigen Gussteil unschöne Grate ausbilden. Deshalb sollte der Luftspalt so klein wie nur möglich sein, sodass nur ganz wenig Gussmaterial darin eindringen kann. Dann wird jedoch das Austreten der Luft verlangsamt, so dass sich womöglich doch wieder Lunker im Guss ausbilden können.

Schwieriger ist auch das Entlüften von domartigen Partien des Gussteils. Wenn diese Dome sehr weit entfernt von den Trennflächen der einzelnen Formen angeordnet werden müssen, so kann der Weg von Luftblasen aus diesen Domen bis zu den Entlüftungsschlitzen in den Trennbereichen so lang sein, dass Blasen innerhalb des Domes verbleiben und das Gussteil dann Ausschuss wird.

Die gattungsbildende US 6,367,765 zeigt einen Teil einer Gussform, in der sich Bolzen befinden, die zum einen der Entlüftung dienen, indem Kanäle vorhanden sind, durch welche die Luft von der äußeren Stirnfläche des Bolzens in den Außenraum gelangen kann und zum anderen dieser Bolzen eine Stösselfunktion besitzt, d. h. eine in axialer Richtung verlaufende Bewegung ausführen kann. Die der Entlüftung dienenden Luftlöcher sind derart dimensioniert, dass Luft entweichen Gußmasse jedoch zurückgehalten wird. An der Stirnfläche ist in axialer Richtung eine Tasche angebracht ist, an deren außen liegende Stirnfläche ein aus mehreren Teilen bestehendes Gitter eingesetzt ist.

Auf diesem Hintergrund hat sich die Erfindung die Aufgabe gestellt, einen Entlüfter für Gussformen zu schaffen, der auch zum Auswerfen des Gussstückes geeignet ist und der sich durch besondere Stabilität und Langlebigkeit auszeichnet.

Als Lösung dieser Aufgabe lehrt die Erfindungdie im Kennzeichen des Anspruches 1 angegebenen Merkmale.

Ein entscheidendes Merkmal der Erfindung ist die partielle Sperrwirkung der Luftlöcher, die die großen und miteinander vernetzten Moleküle des Gussmaterials daran hindern, durch die Löcher hindurchzutreten, aber groß genug sind um Luft hindurch zulassen. Der wesentliche Vorteil dieser erfinderischen Materialsperre ist, dass sie ohne Mechaniken, ohne besondere Werkstoffe oder aufwendige Herstellungsverfahren auskommt, sondern lediglich aus einer Vielzahl von feinen Bohrungen besteht. Diese Bohrungen können auf aktuellem Stand der Technik z.B. durch Laserstrahlen relativ schnell und kostengünstig hergestellt werden. Die Fokussierung der Strahlen ist so genau, dass die Durchmesser der Bohrungen oder Kanäle auf einige Mikrometer kalibriert werden können. Dadurch ist die gewünschte Trennung von Luft und Gussmaterial auch über zahlreiche Entlüfter hinweg mit gleich bleibender Genauigkeit möglich.

Insbesondere in domartig aufragenden oder anderweitig nach oben weisenden Abschnitten einer Gussform, in denen sich ansonsten Luft wie in einer Taucherglocke sammeln würde, kann ein erfindungsgemäßer Entlüfter an den am höchsten aufragenden Punkt gesetzt werden und die beim Einspritzen der Gussmasse sich dort sammelnde Luftmenge nach oben hin ablassen, ohne dass sich an dieser Stelle durch nachdrängende Gussmasse nach dem Abkühlen und Erstarren ein Grat, ein Wulst oder eine andere, unerwünschte Ausstülpung bildet, die nach dem Guss wieder entfernt werden muss, wie z.B. durch teure manuelle Nacharbeit oder durch maschinelle Bearbeitung, z.B. mittels einer CNC gesteuerten Entgratungsmaschine, die nur für eine hohe Investitionssumme verfügbar ist und für jedes neue Werkstück eine Programmierung durch erfahrenes und deshalb teures Personal erfordert.

Des weiteren ist der Entlüfter ein Bolzen, der nahe zu seiner Stirnfläche von einer Querbohrung durchstoßen wird, die quer zu seiner Längsachse verläuft. Die kleinen Luftlöcher verlaufen von der Stirnfläche bis zu der Querbohrung. Der Bolzen ist von der Querbohrung bis zu seiner Außenfläche seitlich abgeflacht. Diese Abflachung und die Wandung der Entlüftungsöffnung bilden einen Luftkanal, durch den die austretende Luft strömt.

Ein Entlüfter, der zusätzlich zum Auswerfen genutzt wird, hat meist die Form eines Bolzens oder eines Stiftes. Je nach Anwendung kann er jedoch auch als Platte, als Ring oder als Hülse geformt sein.

Je nach Anwendung kann auch nur ein Teil aller Entlüfter zusätzlich als Auswerfer genutzt werden. Es ist durchaus denkbar, dass z.B. nur jeder zweite Entlüfter in einer Doppelfunktion auch als Auswerfer dient.

Insbesondere dann, wenn die Seitenwände eines domartigen Bereiches eines Gussteils einen sehr kleinen Winkel miteinander bilden, also nahezu parallel zueinander verlaufen, ist bei der Entnahme die Haftreibung in der Form sehr hoch. Wenn das Gussteil aus der Form herausgezogen wird, kann dieser domartige Bereich schlimmstenfalls abgerissen werden, was nicht nur zum Austausch dieses Gussexemplars führt, sondern auch aufwändige, manuelle Reinigungen erfordert.

Deshalb werden in derartige Bereiche stiftartige "Auswerfer" eingesetzt, deren Innenfläche bündig mit der Innenfläche der Gussform abschließt.

Zum Herausnehmen des Gussteils aus der Form wird auf die Außenseite des Auswerfers ein erhöhter Druck aufgebracht, z. B. mit einem Hammerschlag, sodass sich das Gussteil von der Form löst und ausgeworfen werden kann.

Der Aufwand, einen solchen Auswerfer in die Form einzuarbeiten ist hoch. Bei ungenauer Passung des Stiftes in seiner Aufnahmebohrung kann es zur Gratbildung oder - bei fehlerhafter, axialer Ausrichtung - zu Fehlstellen oder gar Löchern im Gussteil führen. Dennoch ist ein Auswerfer für etwas komplexere Gussteile unverzichtbar.

Ein Problem der erfindungsgemäßen Entlüfter ist, dass sie oft in die Nähe oder sogar an die gleiche Stelle der Form wie die Auswerfer angeordnet werden müssen, um die Form bei dem Gießen vollständig zu entlüften. Die Anordnung von zwei Elementen in diesem Bereich führt zu einer Schwächung der Form und einer unnötigen Komplizierung.

Eine weitere Idee der Erfindung ist es, die Funktion des "Entlüftens" beim Gießen mit der Funktion des "Auswertens" durch Auswerfer zu verbinden. Dadurch werden an den kritischen Bereichen eines Gussteiles statt zuvor zwei Öffnungen nur noch eine benötigt, wodurch sich der Aufwand bei der Herstellung der Formen deutlich reduziert und die Möglichkeit für Fehlgüsse durch inkorrekt positionierte Teile der Gussform halbiert.

Ein Vorteil ist, dass die zum Auswerfen unbedingt erforderliche, mechanische Stabilität des Auswerfers durch das Einbringen der zusätzlichen Luftlöcher kaum reduziert wird, da die Luftlöcher nur sehr klein und bevorzugt im Zentrum des stiftförmigen Auswerfers angeordnet sind. Bekanntlich weist ein Rohr eine nur wenig geringere Steifigkeit gegenüber Kräften in axialer Richtung auf als ein massiver Zylinder gleichen Durchmessers.

Ein weiterer Vorzug dieser Konfiguration ist, dass auf die Gussform von außen aufgeblasene Kühlluft während des Erstarrens des Gussmaterials durch die Luftführung im Auswerfer direkt an das Gussmaterial heran gelangen kann und dadurch die Kühlwirkung verstärkt.

Erfindungsgemäße Entlüfter sind vor allem für den Kunststoffspritzguss oder den Metalldruckguss geeignet, bei dem das flüssige Gussmaterial ein flüssiger Kunststoff oder ein flüssiges Metall ist.

Damit dieses flüssige Material nicht durch die Luftlöcher in dem Entlüfter heraus tritt, müssen die Luftlöcher einen Durchmesser von weniger als 0,1 Millimeter aufweisen. Daraus ergibt sich, dass sie sehr zahlreich sein müssen, um eine nennenswerte Luftmenge hindurch lassen zu können.

Je nach Viskosität des flüssigen Materials sind die Luftlöcher unter Umständen noch kleiner. Für viele, bekannte Kunststoffe wird ein Durchmesser der Luftlöcher von ca. 30 Mikrometern als bester Wert eingestuft.

In der Praxis ist es von großem Vorteil, wenn die erfindungsgemäßen Luftlöcher über ihre gesamte Länge hinweg einen gleich bleibenden oder nach außen hin größer werdenden Querschnitt aufweisen. Dadurch ist der Strömungswiderstand für die entweichende Luft so gering wie nur möglich, was die Zeitdauer für das Entweichen der Luft minimiert und folglich das Risiko der Lunkerbildung im Guss reduziert.

Wenn sich der Querschnitt der Luftlöcher in ihrem Verlauf nicht verengt, besteht eine Chance, dass in das Luftloch eingedrungene Partikel durch das Luftloch hindurch nach außen entweichen. Zumindest können sie durch Beaufschlagen des Luftloches mit Pressluft wieder nach außen gedrückt werden, so dass das Luftloch wieder durchgängig ist und der Entlüfter über längere Zeit hinweg uneingeschränkt nutzbar ist.

In diesem Punkt unterscheidet sich der erfindungsgemäße Lüfter wesentlich von Metallschäumen, einem Vlies aus Metallfasern, übereinander geschichteten Drahtnetzen, poröser Keramik oder anderen Medien, die ebenfalls luftdurchlässig sind, aber durch Änderungen des Querschnittes der Luftführungen dem Luftstrom einen relativ viel höheren Strömungswiderstand entgegensetzen und sehr viel eher durch Verunreinigungen verstopft sind.

Die zahlreichen feinen Luftlöcher können als Kanal von der inneren Stirnfläche des Entlüfters bis zur Außenfläche durchgeführt werden. Zu bevorzugen ist es jedoch, dass diese sehr feinen Luftkanäle nur recht kurz sind und mit wenigen größeren oder einem einzigen gemeinsamen Luftkanal verbunden sind, der bis an die Außenfläche führt.

Der Bolzen kann einen zylindrischen Querschnitt aufweisen. Es sind aber auch andere Profile, wie z.B. ein Vierkant, ein Sechskant, sternförmige Profile mit scharfen oder mit runden Kanten oder beliebig geformte Querschnitte denkbar.
Der Bolzen kann einstückig ausgeführt werden. Das ist z.B. bei spezifisch während des Auswerfens sehr hoch belasteten Bolzen ein Vorteil,

Die Querschnittsfläche der Stifte kann bei sehr hohem Spritzdruck zur Innenseite hin größer sein als zur Außenseite, sodass die Stifte auch bei den höchsten Druckwerten nicht nach außen herausgepresst werden können. Meist ist jedoch der Durchmesser eines Auswerfers an der Außenseite etwas größer als im Schaft. Denkbar sind auch Stifte mit einem über ihre Länge hinweg gleichen Profil, bei denen also Form und Größe der zur Kavität hin weisenden Stirnfläche der Außenfläche gleichen.

Diese Form ist insbesondere dann sinnvoll, wenn die innere Stirnfläche eines Auswerfers größer sein soll als die Außenfläche des Auswerfers, damit der Auswerfer sich durch eine konische Bauform oder durch abgestuft nach außen hin abnehmende Durchmesser in einer komplementär dazu geformten Öffnung der Form gegen den Druck der flüssigen Gussmasse anstemmen kann. Da die Scheibe trotz der großen Anzahl der darin enthaltenen Luftlöcher als eine Strömungsbremse im Luftkanal wirkt, ist es physikalisch sinnvoll, sie an der Stelle des größten Durchmessers des Luftkanals zu positionieren, hier also in dem nach innen weisenden Teil.

Als Herstellungsverfahren für die sehr dünnen Luftlöcher ist ein Laserstrahl geeignet Eine andere Möglichkeit ist das Sintern oder auch die Verbindung des Sinterns mit einem Laserstrahl.

Als Verfahren zum Gießen und Auswerfen eines Gussteiles in und aus einer erfindungsgemäßen Gussform schlägt die Erfindung das folgende Verfahren vor: Im ersten Schritt werden in alle Entlüftungsöffnungen je ein Auswerfer von der Innenseite der Form her soweit eingedrückt, dass ihre Stirnfläche bündig mit der Innenfläche der Form verläuft. Im zweiten Schritt werden die Formen miteinander verbunden, sodass sie die Kavität der Gussform allseits umschließen. Dann wird im dritten Schritt flüssiges Gussmaterial eingespritzt oder eingedrückt, wobei die in der Kavität befindliche Luft durch die Luftlöcher und den Luftkanal in jedem Auswerfer an die Außenfläche gedrückt wird. Anschließend, im vierten Schritt erstarrt das flüssige Gussmaterial in der Kavität. Im fünften Schritt müssen alle Formen voneinander getrennt werden und im sechsten Schritt das noch in einer Form befindliche Gussteil ausgeworfen werden, wozu auf die Außenfläche der Auswerfer entsprechender Druck ausgeübt werden muss.

Dieser Druck kann manuell - z. B. durch einen Schlag mit einem Hammer - aufgebracht werden. In der Regel werden jedoch dazu hydraulische Stempel eingesetzt. Immer öfter treiben auch Elektromotore z.B. über Spindeln die Auswerfer aus. Ebenso ist die Anwendung von Pneumatikzylindern denkbar.

Das Prinzip einer erfindungsgemäßen Gussform kann für alle Gussverfahren und alle Gussformen genutzt werden, bei denen während des Ausgiessens oder während des Ausfüllens der Form eine Entlüftung erforderlich ist. Als Beispiele werden der Kunststoffspritzguss, der Metallspritzguss, der Metalldruckguss, das Duroplastspritzgießen, das Duroplastpressverfahren, die Gummiverarbeitung oder die Kautschukverarbeitung genannt.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:

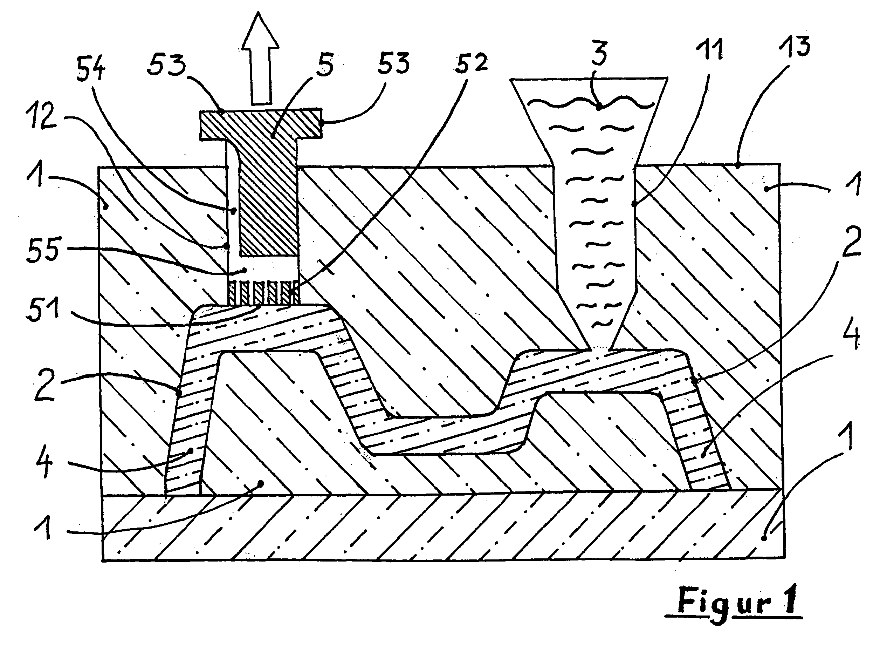

- Figur 1: Schnitt durch eine erfindungsgemäße Gussform mit Entlüfter als Auswerfer

Die Figur 1 zeigt im Einzelnen einen Schnitt durch eine erfindungsgemäße Gussform. Sie besteht in dem hier gezeichneten Ausführungsbeispiel aus insgesamt drei Formen 1. Davon ist die unterste Form 1 eine Platte, auf der eine weitere Form 1 steht, die den inneren Kern der Gussform bildet und eine äußere Form 1, die die obere Außenfläche 13 der Gussform und die äußere Wandung der Kavität 2 mit dem darin enthaltenen Gussteil 4 bildet.

Im Schnitt ist schnell zu erkennen, dass die Kavität 2 zwei nach oben weisende, domartige Ausstülpungen aufweist. In der rechten Ausstülpung mündet der Eintrittskanal 11 und bringt das flüssige Gussmaterial 3 in die Kavität 2 ein. Innerhalb der Kavität 2 strömt es auch in die links gezeichnete Ausstülpung des Gussteils 4.

An der oberen Kante dieser Ausstülpung ist die Entlüftungsöffnung 12 in der obersten Form 1 zu erkennen. Sie ist mit einem Entlüfter 5 verschlossen, an dessen Seite der Luftkanal 54 von der Außenfläche 53 bis zu einer Querbohrung 55 führt, die quer zur Längsachse des Entlüfters 5 ausgerichtet ist. Von dieser Querbohrung 55 zweigen mehrere kleine Luftlöcher 52 ab, die bis zur Stirnfläche 51 hin reichen und die Verbindung mit der Kavität 2 herstellen.

In Figur 1 sind fünf kleine Luftlöcher 52 in den Schnitt des Entlüfters 5 eingezeichnet. In der Praxis wird die Anzahl dieser Luftlöcher 52 jedoch erheblich größer sein, da ihr Durchmesser im Verhältnis zu der Größe des Entlüfters 5 erheblich kleiner ist, als in Figur 1 zeichnerisch dargestellt werden kann, damit zwar noch Luft durch die Luftlöcher 52 entweichen kann, aber kein flüssiges Gussmaterial 3 in die Luftlöcher 52 eintreten kann.

In Figur 1 ist sehr gut nachzuvollziehen, wie Luft aus der links gezeichneten Ausstülpung des Gussteils 4 in die Luftlöcher 52 eintritt, sich in der Querbohrung 55 sammelt, von dort in den Luftkanal 54 strömt und dann nach außen hin austritt, was durch einen großen Pfeil über dem Entlüfter 5 symbolisiert ist.

In Figur 1 ist auch die Funktion des Entlüfters 5 zum Herausdrücken des Gussteils 4 aus der Kavität 2 in der oberen Form 1 nachvollziehbar: Am oberen Rand der Gussform ist zu erkennen, dass der Entlüfter 5 mit seiner Außenfläche 53 über die Außenfläche 13 der oberen Form 1 hinaus ragt. Wenn die Formen 1 voneinander getrennt sind und wenn dann das Gussteil 4 noch in der oberen Form 1 haftet, so wird ein Druck auf die nach oben weisende Außenfläche 53 des Entlüfters 5 ausgeübt und damit das Gussteil 4 aus der Form 1 ausgeworfen.

### Bezugszeichenliste

- 1: Formen, umschließen einen Hohlraum, die Kavität 2
- 11: Eintrittskanal 11 in der Form 1
- 12: Entlüftungsöffnung in der Form 1
- 13: Außenfläche der Form 1
- 2: Kavität, Hohlraum innerhalb der aneinandergrenzenden Formen 1
- 3: flüssiges Gussmaterial
- 4: Gussteil, in der Kavität 2
- 5: Entlüfter, in Entlüftungsöffnung12
- 51: Stirnfläche des Entlüfters 5, die zur Kavität 2 hinweist
- 52: kleine Luftlöcher in Stirnfläche 51
- 53: Außenfläche des Entlüfters 5
- 54: Luftkanal, verbindet die Luftlöcher 52 mit der Außenfläche 53
- 55: Querbohrung, quer zur Längsachse des Entlüfters 5, verbunden mit den Luftlöchern 52 und angrenzend an den Luftkanal 54

## Patentansprüche

1. Gussform, bestehend aus wenigstens zwei aneinandergrenzenden Formen (1), die einen Hohlraum, die Kavität (2), umschließen,
- der über wenigstens einen Eintrittskanal (11) von außen her zugänglich ist und
- in den flüssiges Gussmaterial (3) einspritzbar oder eindrückbar ist und
wenigstens einer Entlüftungsöffnung (12),
- die von der Kavität (2) bis zur Außenfläche (13) einer Form (1) verläuft, und
- die durch einen Entlüfter (5) verschlossen ist, wobei
die zur Kavität (2) weisende Stirnfläche (51) des Entlüfters (5) von Luftlöchern (52) durchbrochen ist,
- die für Luft durchlässig sind, aber
- das flüssige Gussmaterial (3) zurückhalten und
- die mit der Außenfläche (53) des Entlüfters (5) in Verbindung stehender Entlüfter (5) durch einen erhöhten Druck oder einen Druckimpuls
auf seine Außenfläche (53) in der Entlüftungsöffnung verschiebbar ist, und der Entlüfter (5) ein Bolzen ist,
**dadurch gekennzeichnet, dass**
der Verschiebeweg des Entlüfters (5) derart bemessen ist, dass er mit seiner Stirnfläche (51) auf das Gussteil (4) auftrifft und
die Entlüftungsöffnung (12) etwa in Richtung des Entfernens des erhärteten Gussteiles (4) aus der Form (1) weist und
der Entlüfter (5) aus einem Bolzen besteht, der nahe zu seiner Stirnfläche (51) von einer Querbohrung durchstoßen wird, die quer zu seiner Längsachse verläuft, wobei die Luftlöchern (52) von der Stirnfläche (51) bis zu der Querbohrung verlaufen und der Bolzen von der Querbohrung bis zu seiner Außenfläche (53) seitlich abgeflacht ist und diese Abflachung zusammen mit der Wandung der Entlüftungsöffnung (12) den Luftkanal (54) bildet.

2. Gussform nach einem der vorhergehenden Ansprüche, **dadurch gekennzeichnet, dass** die kleinen Luftlöcher (52) einen Durchmesser von weniger als 0,1 mm aufweisen.

3. Gussform nach einem der vorhergehenden Ansprüche, **dadurch gekennzeichnet, dass** die kleinen Luftlöcher (52) einen Durchmesser in der Größenordnung von etwa 30µm aufweisen.

4. Gussform nach einem der vorhergehenden Ansprüche, **dadurch gekennzeichnet, dass** die Stirnfläche (51) größer ist als die Außenfläche (53).

5. Gussform nach einem der vorhergehenden Ansprüche, **dadurch gekennzeichnet, dass** die Stirnfläche (51) die gleiche Form und Größe wie die Außenfläche (53) hat.

6. Gussform nach einem der vorhergehenden Ansprüche, **dadurch gekennzeichnet, dass** die Stirnfläche (51) kleiner ist als die Außenfläche (53).

7. Gussform nach einem der vorhergehenden Ansprüche, **dadurch gekennzeichnet, dass** die Luftlöcher (52) durch einen Laserstrahl gebildet sind.

8. Gussform nach einem der vorhergehenden Ansprüche, **dadurch gekennzeichnet, dass** die Luftlöcher (52) durch Metallsintern gebildet sind.

## Claims

1. Casting mould comprising at least two adjoining moulds (1) that enclose a hollow space, the cavity (2),
- which is accessible from the outside via at least one inlet channel (11) and
- into which liquid casting material (3) can be injected or pressed, and at least one vent opening (12)
- that extends from the cavity (2) to the outer surface (13) of a mould, (1), and
- is closed by a breather (5), wherein
that end face (51) of the breather (5) that faces the cavity (2) is permeated by air holes (52),
- which are permeable to air, but
- keep back the liquid casting material (3) and
- that breather (5) which connect to the outer surface (53) of the breather (5) is **characterised by** an elevated pressure or a pressure impulse.
Is displaceable on its outer surface (53) in the vent opening, and the breather (5) is a bolt,
**characterised in that**
the displacement path of the breather (5) is dimensioned such that it comes into contact with the cast part (4) at its end face (51) and the vent opening (12) faces approximately in the direction of removal of the hardened cast part (4) from the mould (1) and the breather (5) consists of a bolt, which, close to its end face (51), is penetrated by a transverse bore, which runs transversely to the longitudinal axis of said bolt, the air holes (52) running from the end face (51) as far as the transverse bore and the bolt being laterally flattened from the transverse bore as far as its outer surface (53), and said flattening, together with the wall of the vent opening (12), forming the air channel (54).

2. Casting mould according to one of the preceding claims,
**characterised in that** the small air holes (52) have a diameter of less than 0.1 mm.

3. Casting mould according to one of the preceding claims,
**characterised in that** the small air holes (52) have a diameter of the order of about 30 µm..

4. Casting mould according to one of the preceding claims,
**characterised in that** end face (51) is larger than the outer surface (53).

5. Casting mould according to one of the preceding claims,
**characterised in that** the end face (51) has the same shape and size as the outer surface (53).

6. Casting mould according to one of the preceding claims,
**characterised in that** end face (51) is smaller than the outer surface (53).

7. Casting mould according to one of the preceding claims,
**characterised in that** the air holes (52) have been produced by means of a laser beam.

8. Casting mould according to one of the preceding claims,
**characterised in that** the air holes (52) have been produced by sintering a metal.

## Revendications

1. Moule à couler consistant en au moins deux moules (1) voisins qui entourent un espace creux, la cavité (2),
- qui est accessible depuis l'extérieur via au moins un canal d'entrée (11) et
- dans laquelle il est possible d'injecter ou de presser du matériau de coulée (3) liquide et
- au moins une ouverture d'aération (12),
- qui va de la cavité (2) jusqu'à la surface extérieure (13) d'un moule (1), et
- qui est fermée par un aérateur (5), sachant que la surface frontale (51) de l'aérateur (5) orientée vers la cavité (2) est percée d'orifices d'air (52),
- qui sont perméables à l'air, mais
- qui retiennent le matériau de coulée liquide (3),
- l'aérateur (5) relié à la surface extérieure (53) de l'aérateur (5) pouvant être déplacé sous l'effet d'une pression accrue ou d'une impulsion de pression sur sa surface extérieure (53) dans l'ouverture d'aération, l'aérateur étant constitué d'un boulon,
**caractérisé par le fait que**
la course de déplacement de l'aérateur (5) est mesurée de manière que ce dernier vienne toucher la pièce de coulée (4) avec sa surface frontale (51), l'ouverture d'aération (12) étant à peu près orientée dans le sens de l'enlèvement hors du moule (1) de la pièce de coulée (4) durcie, l'aérateur (5) consistant en un boulon qui est percé d'un orifice transversal à proximité de sa surface frontale (51), qui suit un tracé perpendiculaire à son axe longitudinal, sachant que les orifices d'air (52) vont de la surface frontale (51) à l'orifice transversal, que le boulon est aplati sur le côté jusqu'à sa surface extérieure (53), et que cet aplatissement forme, avec la paroi de l'ouverture d'aération (12), la gaine d'air (54).

2. Moule de coulée selon une des revendications précédentes,
**caractérisé par le fait que** les petits orifices d'air (52) présentent un diamètre inférieur à 0,1 mm.

3. Moule de coulée selon une des revendications précédentes,
**caractérisé par le fait que** les petits orifices d'air (52) présentent un diamètre d'env. 30 µm.

4. Moule de coulée selon une des revendications précédentes,
**caractérisé par le fait que** la surface frontale (51) est supérieure à la surface extérieure (53).

5. Moule de coulée selon une des revendications précédentes,
**caractérisé par le fait que** la surface frontale (51) a la même forme et taille que la surface extérieure (53).

6. Moule de coulée selon une des revendications précédentes,
**caractérisé par le fait que** la surface frontale (51) est plus petite que la surface extérieure (53).

7. Moule de coulée selon une des revendications précédentes,
**caractérisé par le fait que** les orifices d'air (52) sont formés par un rayon laser.

8. Moule de coulée selon une des revendications précédentes,
**caractérisé par le fait que** les orifices d'air (52) sont formés par frittage métallique.
